# EUROPÄISCHE PATENTSCHRIFT

(11) **EP 1 756 179 B1**
(45) Veröffentlichungstag und Bekanntmachung des Hinweises auf die Patenterteilung: **05.12.2007**
(21) Anmeldenummer: 05750531.5
(22) Anmeldetag: 03.06.2005
(51) Int. Cl.: C08F 212/08, C08F 220/34, C08F 220/36, C08F 220/60, C08F 2/06, C08F 257/02, D21H 21/16, C14C 11/00

(54) **FEINTEILIGE, AMPHOTERE, WÄSSRIGE POLYMERDISPERSIONEN, VERFAHREN ZU IHRER HERSTELLUNG UND IHRE VERWENDUNG**
FINE-PARTICLED AMPHOTERIC AQUEOUS POLYMER DISPERSION METHOD FOR PRODUCTION AND USE THEREOF
DISPERSIONS POLYMERES AQUEUSES, AMPHOTERES, A FINES PARTICULES, LEURS PROCEDES DE PRODUCTION ET D'UTILISATION

(30) Priorität: 07.06.2004 DE 102004027735
(43) Veröffentlichungstag der Anmeldung: 28.02.2007
(73) Patentinhaber: BASF Aktiengesellschaft, 67056 Ludwigshafen (DE)
(72) Erfinder: KUKULA, Hildegard, 68163 Mannheim (DE); ETTL, Roland, 68775 Ketsch (DE); DYLLICK-BRENZINGER, Rainer, 67346 Speyer (DE); STURM, Bernhard, 67071 Ludwigshafen (DE)
(86) Internationale Anmeldenummer: PCT/EP2005/005961
(87) Internationale Veröffentlichungsnummer: WO 2005/121195

(56) Entgegenhaltungen:
- EP-A- 0 051 144
- EP-A- 1 180 527
- US-A1- 2003 072 950

## Beschreibung

Die Erfindung betrifft feinteilige, amphotere, wäßrige Polymerdispersionen, die durch eine zweistufige Polymerisation erhältlich sind, wobei man in der ersten Polymerisationsstufe eine kationische und anionische Monomere enthaltende Monomermischung in einem mit Wasser teilweise bis vollständig mischbaren Lösemittel nach Art einer Lösungspolymerisation polymerisiert, die Lösung mit Wasser verdünnt und in der so erhältlichen Reaktionsmischung in der zweiten Polymerisationsstufe mindestens ein nichtionisches, ethylenisch ungesättigtes Monomer nach Art einer Emulsionspolymerisation polymerisiert, Verfahren zu ihrer Herstellung und ihre Verwendung als Leimungsmittel für Papier, Pappe und Karton.

Aus der DE-A-24 52 585 sind wässrige Copolymerisat-Dispersionen bekannt, die durch eine zweistufige Polymerisation in wässriger Phase erhältlich sind, wobei man zunächst ein Copolymerisat aus einem säuregruppenhaltigen Monomer und einem ethylenisch ungesättigten Monomer mit einer tertiären oder quaternären Aminogruppe oder einer Stickstoff enthaltenden heterocyclischen Gruppe in wässriger Phase copolymerisiert und dann unter weiterer Copolymerisation Styrol und/oder Acrylnitril und gegebenenfalls (Meth)Acrylsäureester sowie gegebenenfalls weitere olefinisch ungesättigte Monomere zufügt und auspolymerisiert. Die so hergestellten Polymerdispersionen werden als Leimungsmittel für Papier verwendet.

Aus der DE-A-24 54 397 sind kationische wässrige Copolymerisat-Dispersionen bekannt, die durch Emulsions-Copolymerisation olefinisch ungesättigter Monomere in Gegenwart kationischer polymerer Dispergiermittel/Schutzkolloide hergestellt werden. Dazu wird ein Vorpolymerisat durch Lösungspolymerisation von hydrophoben ethylenisch ungesättigten Monomeren mit Monomeren, die quaternäre oder ternäre Stickstoffe enthalten, in mit Wasser mischbaren Lösemitteln, vorzugsweise Alkohole oder Aceton, synthetisiert. Nach Zugabe von Wasser und Ameisensäure, um tertiäre Aminogruppen zu protonieren, werden anschließend in der wässrigen Lösung des Vorpolymerisats nach Art einer Emulsionspolymerisation hydrophobe Monomere wie Styrol, Acrylnitril, (Meth)Acrylsäureester und/oder Butadien, gegebenenfalls mit bis zu 10 Gew.% an α,β-monoolefinisch ungesättigten Carbonsäuren copolymerisiert. Die Monomere werden so gewählt, dass die Glastemperatur des Copolymerisates zwischen - 15 und + 60 °C liegt. Die so erhältlichen Dispersionen werden als Überzugsmittel für Papier, Leder oder textile Flächengebilde und als Leimungsmittel für Papier verwendet.

In der EP-A-0 051 144 werden amphotere, feinteilige, wässrige Polymerdispersionen beschrieben, die durch eine zweistufige Polymerisation hergestellt werden. In der ersten Stufe der Herstellung wird in einer Lösungscopolymerisation in einem mit Wasser mischbaren Lösemittel ein niedermolekulares Vorpolymerisat synthetisiert, wobei die verwendete Monomermischung neben weiteren Monomeren, jeweils pro Mol eines stickstoffhaltigen Monomers, das eine Aminogruppe und/oder eine quartäre Aminogruppe trägt, 0,5 Mol bis 1,5 Mol einer ethylenisch ungesättigten Carbonsäure enthält. Das Vorpolymerisat wird anschließend in Wasser dispergiert und in einer Emulsionspolymerisation mit nichtionischen, ethylenisch ungesättigten Monomeren unter Verwendung üblicher wasserlöslicher Initiatoren umgesetzt. Die erhaltenen Dispersionen werden als Masse- und Oberflächenleimungsmittel für Papier verwendet.

Aus der EP-A-0 058 313 sind kationische Leimungsmittel für Papier bekannt, die dadurch erhältlich sind, dass man zunächst ein wasserlösliches kationisches Terpolymer bestehend aus N,N-Dimethylaminoethylacrylat und/oder-methacrylat, Styrol und Acrylnitril durch Lösungspolymerisation in einem Alkohol herstellt. Nach einer sich anschließenden Quarternisierungsreaktion sollen mindestens 10% der enthaltenen N,N-Dimethylaminogruppen quaternisiert und die restlichen protoniert vorliegen. Dieses Terpolymerisat wird als Emulgator bei der sich daran anschließenden radikalisch iniitiierten Emulsionspolymerisation eines Monomergemisches von Acrylnitril/Methacrylnitril und (Meth)Acrylsäureestern eingesetzt.

In der US 4 659 431 wird ein kationisches Leimungsmittel für Papier beschrieben, das ebenfalls nach einem zweistufigen Verfahren hergestellt wird. Zunächst wird ein Terpolymerisat hergestellt, indem man eine Monomermischung bestehend aus N,N-Dimethylaminoethylacrylat und/oder -methacrylat, Styrol und Acrylnitril nach Art einer Lösungspolymerisation in einem Alkohol polymerisiert. Nachfolgend werden mindestens 10% der N,N-Dimethylamino-Gruppen quaterniert, während die restlichen in protonierter Form vorliegen. Das Terpolymerisat wird als Emulgator bei der radikalisch initiierten Emulsionspolymerisation einer Monomermischung verwendet, die bis zu 90 Gew.-% Acrylnitril und /oder Methacrylnitril, 5 bis 95 Gew.-% Styrol und 5 bis 95 Gew.-% (Meth)Acrylsäureester enthält.

Aus der EP-A-1 180 527 sind kationische, feinteilige, wässrige Polymerdispersionen bekannt, die als Masse- und Oberflächenleimungsmittel für Papier verwendet werden. Die Herstellung der Dispersion erfolgt ebenfalls in einem zweistufigen Verfahren, bei dem zunächst in einer gesättigten C₁- bis C₆-Carbonsäure ein Lösungspolymerisat synthetisiert wird, das anschließend in einer Emulsionspolymerisation eines gegebenenfalls substituierten Styrols und eines (Meth)Acrylsäureesters eingesetzt wird. Die Emulsionspolymerisation wird unter Verwendung üblicher, wasserlöslicher Initiatoren, z. B. Peroxide zusammen mit Redox-Systemen, durchgeführt.

Der vorliegenden Erfindung liegt die Aufgabe zugrunde, weitere Polymerdispersionen zur Verfügung zu stellen, die gegenüber den bekannten Polymerdispersionen eine verbesserte Wirksamkeit als Leimungsmittel für Papier haben.

Die Aufgabe wird erfindungsgemäß gelöst mit feinteiligen, amphoteren, wässrigen Polymerdispersionen, die durch eine zweistufige Polymerisation erhältlich sind, wobei man in der ersten Polymerisationsstufe ein Vorpolymerisat aus einem Monomerengemisch aus
(a) 15 bis 40 Gew.-% mindestens eines (Meth)Acrylsäureesters und/oder (Meth)Acrylamids mit jeweils einer freien Aminogruppe, protonierten und/oder quaternisierten Aminogruppe,
(b) 40 bis 70Gew.-% mindestens eines gegebenenfalls substituierten Styrols,
(c) 0 bis 25 Gew.-% Acrylnitril und/oder Methacrylnitril,
(d) 0,5 bis 5 Gew.-% mindestens eines Säuregruppen enthaltenden ethylenisch ungesättigten Monomers und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt,
in einer Lösungspolymerisation in einem mit Wasser teilweise bis vollständig mischbaren Lösemittel herstellt, die Lösung/Dispersion des Vorpolymerisats dann mit Wasser versetzt und anschließend in der wässrigen Lösung des Vorpolymerisats in einer zweiten Polymerisationsstufe mindestens ein nichtionisches, ethylenisch ungesättigtes Monomer einer Emulsionspolymerisation unterwirft.

In der zweiten Polymerisationsstufe wird vorzugsweise ein Monomerengemisch aus
(a) 0 bis 80 Gew.-% mindestens eines gegenbenenfalls substituierten Styrols,
(b) 0 bis 100 Gew.-% mindestens eines C₁- bis C₁₈-(Meth)Acrylsäureesters und
(c) 0 bis 30 Gew.-% mindestens eines von (a) und (b) verschiedenen, nichtionischen ethylenisch ungesättigten Monomers,
wobei die Summe aus (a) + (b) + (c) 100 Gew.-% ergibt, in Gegenwart von Initiatoren polymerisiert.

Vorzugsweise stellt man in der ersten Polymerisationsstufe ein Vorpolymerisat her, indem man eine Monomermischung aus
(a) 15 bis 40 Gew.-% mindestens eines (Meth)Acrylsäureesters und/oder (Meth)Acrylamids mit jeweils einer freie Aminogruppe, protonierten und/oder quaternisierten Aminogruppe,
(b) 40 bis 70 Gew.-% mindestens eines gegebenenfalls substituierten Styrols,
(c) 0 bis 25 Gew.-% Acrylnitril und/oder Methacrylnitril,
(d) 0,5 bis 5 Gew.-% mindestens eines Säuregruppen enthaltenden ethylenisch ungesättigten Monomers ethylenisch ungesättigten Carbonsäure oder eines Carbonsäureanhydrids und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt, nach Art einer Lösungspolymerisation in einem mit Wasser teilweise bis vollständig mischbaren organischen Lösungsmittelpolymerisiert.

Besonders bevorzugt sind Vorpolymerisate, die in der ersten Polymerisationsstufe aus einer Monomermischung aus
(a) Dimethylaminopropylmethacrylamid in Form des Salzes mit mindestens einer Mineralsäure oder einer organischen Säure und/oder in quaternisierter Form,
(b) Styrol,
(c) Acrylnitril und/oder Methacrylnitril,
(d) Acrylsäure und/oder Methacrylsäure und
(e) n-Butylacrylat, Isobutylacrylat und/oder tert.-Butylacrylat
hergestellt werden. Für die Emulsionspolymerisation in der zweiten Verfahrensstufe setzt man vorzugsweise ein Monomergemisch aus
(a) 30 bis 70 Gew.-% Styrol und
(b) 70 bis 30 Gew.-% einer Mischung aus n-Butylacrylat und tert.-Butylacrylat im Gewichtsverhältnis 3 : 1 bis 1 : 3 oder
(c) 70 bis 30 Gew.-% tert.-Butylacrylat oder n-Butylacrylat
ein. Anstelle einer Mischung aus n-Butylacrylat und tert.-Butylacrylat kann man auch n-Butylacrylat oder tert.-Butylacrylat jeweils für sich allein mit Styrol copolymerisieren.

Für die Herstellung des Vorpolymerisats verwendet man als Monomere der Gruppe (a) mindestens einen kationischen oder basischen(Meth)Acrylsäureester und/oder mindestens ein kationisches oder basisches (Meth)Acrylamid mit jeweils einer freien Aminogruppe, protonierten und/oder quaternisierten Aminogruppe als Substituent. Die Monomere der Gruppe (a), die eine Aminogruppe als Substituent tragen, können beispielsweise mit Hilfe der Formel (1) charakterisiert werden:

Das niedrigmolekulare Vorpolymerisat, das in der ersten Polymerisationsstufe hergestellt wird, enthält als Komponente (a) mindestens ein stickstoffhaltiges Monomere, das eine Amino- und/oder quaternäre Aminogruppe trägt. Verbindungen dieser Art haben die allgemeine Formel 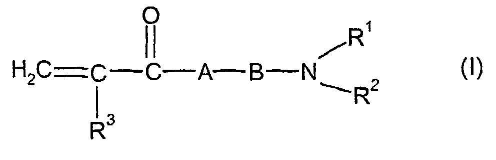 in der
A = O, NH,
B = CₙH₂ₙ, n = 1 bis 8,
R¹, R² = CₘH₂ₘ₊₁, m = 1 bis 4 und
R³ = H, CH₃
bedeutet.

Die quaternisierten Verbindungen können mit Hilfe der folgenden Formel 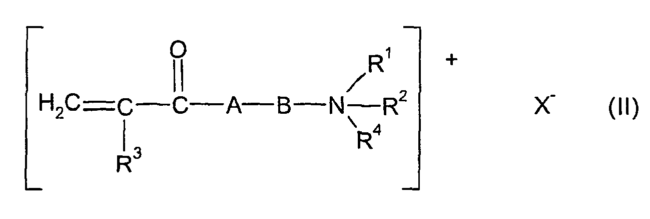
X⁻ = OH⁻, Cl⁻, Br⁻, CH₃-OSO₃⁻
R⁴ = CₘH₂ₘ₊₁, m = 1 bis 4
charakterisiert werden. Die übrigen Substituenten haben die oben angegebene Bedeutung.

Die Verbindungen der Formel II werden in der Regel als kationische Monomere, die der Formel I als basische Monomere bezeichnet. Basische, ethylenisch ungesättigte Monomere sind beispielsweise Acrylsäure- und Methacrylsäureester von Aminoalkoholen, z.B. Diethylaminoethylacrylat, Diethylaminoethylmethacrylat, Dimethylaminopropylacrylat, Dimethylaminopropylmethacrylat, Dibutylaminopropylacrylat, Dibutylaminopropylmethacrylat, Dimethylaminoneopentylacrylat, Aminogruppen enthaltende Derivate des Acrylamids oder Methacrylamids, wie Acrylamidodimethylpropylamin, Methacrylamidodimethylpropylamin und Methacrylamidodimethylpropylamin.

Die quaternären Verbindungen der Formel II werden erhalten, indem man die basischen Monomere der Formel I mit bekannten Quaternisierungsmitteln umsetzt, z.B. mit Methylchlorid, Benzylchlorid, Ethylchlorid, Butylbromid, Dimethylsulfat und Diethylsulfat oder Epichlorhydrin. Diese Monomere verlieren in der quaternisierten Form ihren basischen Charakter.

Vorzugsweise wird als Monomer der Gruppe (a) Dimethylaminopropylmethacrylamid in Form des Salzes mit mindestens einer Mineralsäure oder Carbonsäure und/oder in quaternisierter Form eingesetzt. Bevorzugt in Betracht kommendes Quaternisierungsmittel ist Methylchlorid.

Die Monomere der Gruppe (a) werden bei der Herstellung des Vorpolymerisats in einer Menge von 15 bis 40 Gew.-%, vorzugsweise von 20 bis 35 Gew.-%, bezogen auf die Monomerenmischung (a) bis (e), eingesetzt. Die Summe der Angaben in Gew.-% für die Monomere (a) bis (e) beträgt immer 100.

Für die Herstellung des Vorpolymerisats verwendet man als Monomere der Gruppe (b) Styrol sowie substituierte Styrole wie α-Methylstyrol oder Ethylstyrol. Die Monomere der Gruppe (b) sind zu 40 bis 70 Gew.-%, vorzugsweise 45 bis 60 Gew.-%, in der Monomermischung aus (a) bis (e) enthalten.

Als Monomere der Gruppe (c) kommen Acrylnitril, Methacrylnitril sowie Mischungen aus Acrylnitril und Methacrylnitril in beliebigen Verhältnissen in Betracht. Vorzugsweise wird Acrylnitril als Monomer (c) verwendet. Die Monomere der Gruppe (c) sind wahlweise bei der Herstellung des Vorpolymerisats in der Monomermischung enthalten. Sie werden gegebenenfalls in einer Menge von bis zu 25 Gew.-%, bezogen auf die Summe der Monomere (a) bis (e), eingesetzt. In einer bevorzugten Ausführungsform der Erfindung sind die Monomere dieser Gruppe in einer Menge von 5 bis 20 Gew.-% in der Monomerenmischung enthalten.

Beispiele für Monomere der Gruppe (d) sind ethylenisch ungesättigte C₃- bis C₆-Carbonsäuren wie Acrylsäure, Methacrylsäure, Maleinsäure, Fumarsäure, Itaconsäure, Ethacrylsäure, Crotonsäure, Monoester von ethylenisch ungesättigten Dicarbonsäuren wie Monomethylmaleinat, Monomethylfumarat, Monoethylmaleinat, Monoethylfumarat Monopropylmaleinat, Monopropylfumarat, Mono-n-butylmaleinat und Mono-n-butylfumaratsowie Styrolcarbonsäuren und ethylenisch ungesättigte Anhydride wie Maleinsäureanhydrid und Itaconsäureanhydrid. In Abhängigkeit vom Wassergehalt des in der ersten Polymerisationsstufe eingesetzten Lösemittels werden die Anhydridgruppen der Monomere zu Carboxylgruppen hydrolysiert. Die Anhydridgruppen werden in jedem Fall vor der zweiten Polymerisationsstufe hydrolysiert, wenn nämlich die in der ersten Polymerisationsstufe erhaltene Polymerlösung mit Wasser verdünnt wird. Außerdem eignen sich als Monomere (d) Sulfonsäure- und Phosphonsäuregruppen enthaltende Monomere wie 2-Acrylamido-2-methylpropansulfonsäure und Vinylphosphonsäure. Die Säuregruppen enthaltenden Monomere können in Form der freien Säuregruppen sowie in teilweise oder vollständig mit Alkalimetallbasen, Erdalkalimetallbasen, Ammoniak und/oder Aminen neutralisierter Form eingesetzt werden. Zur Neutralisation der Säuregruppen der Monomere verwendet man beispielsweise Natronlauge, Kalilauge, Soda, Natriumhydrogencarbonat, Ammoniak, Trimethylamin, Triethylamin, Morpholin, Ethanolamin, Diethanolamin, Triethanolamin oder Diethylentriamin. Es ist selbstverständlich möglich, zwei oder mehrere Basen als Neutralisierungsmittel einzusetzen. Vorzugsweise werden aus dieser Monomergruppe Acrylsäure und Methacrylsäure oder Mischungen aus Acrylsäure und Methacrylsäure in beliebigem Verhältnis eingesetzt. Die Monomere der Gruppe (d) sind in einer Menge von 0,5 bis 5 Gew.-%, vorzugsweise 0,7 bis 3,5 Gew.-% in der Monomermischung aus (a) bis (e) enthalten.

Die zur Herstellung des Vorpolymerisats verwendeten Monomermischungen können gegebenenfalls nichtionische, ethylenisch ungesättigte Monomere (e) enthalten, die von den Monomere (b) und (c) verschieden sind. Beispiele für solche Monomere sind Amide wie beispielsweise Acrylamid, Methacrylamid, N-Methylacrylamid, N-Methylolacrylamid, N-Ethylacrylamid, N-Ethylmethacrylamid und N-Methylmethacrylamid; Vinylverbindungen wie Vinylacetat, Vinylpropionat oder Vinylformamid; C₁- bis C₁₈-(Meth)Acrylsäureester wie beispielsweise Methylacrylat, Methylmethacrylat, Ethylacrylat, Ethylmethacrylat, Propylacrylat, Propylmethacrylat, Isopropylacrylat, n-, iso- und tert.-Butylacrylat, n-, iso- und tert.-Butylmethacrylat, Hexylacrylat, Hexylmethacrylat, Ethylhexylacrylat, Ethylhexylmethacrylat, Cyclohexylacrylat, Cyclohexylmethacrylat, n-Decylacrylat Laurylacrylat, Stearylacrylat, Stearylmethacrylat oder Ester der Acrylsäure bzw. Methacrylsäure, die durch Umsetzung mindestens einer Ethylenoxideinheit hergestellt wurden, beispielsweise Hydroxyethylmethacrylat oder Diethylenglykolmonommethacrylat. Es ist selbstverständlich möglich, auch Mischungen der genannten Monomere zu verwenden. Falls die Monomere der Gruppe (e) verwendet werden, so sind sie in einer Menge bis zu 30 Gew.-%, meistens in einer Menge bis zu 15 Gew.-%, bezogen auf die Gesamtmenge der Monomere (a) bis (e) in der Monomermischung enthalten.

In der ersten Polymerisationsstufe werden die Monomere (a) bis (e) nach Art einer Lösungspolymerisation in einem mit Wasser teilweise bis vollständigmischbaren Lösemittel, das bis zu 15 Gew.-% Wasser enthalten kann, polymerisiert. Vorzugsweise setzt man praktisch wasserfreie Lösemittel ein. Die Lösemittel enthalten meistens bis zu ca. 1 Gew.-% Wasser. Beispiele für geeignete Lösemittel sind C₁- bis C₃-Carbonsäuren wie Ameisensäure, Essigsäure und Propionsäure. Alkohole wie Methanol, Ethanol, Propanol und Isopropanol, Ketone wie Aceton und Methylethylketon, Amide wie Dimethylformamid sowie Dimethylsulfoxid, Carbonate wie Propylen- oder Ethylencarbonat und Tetrahydrofuran. Falls man säuregruppenfreie Lösemittel einsetzt, neutralisiert man die Säuregruppen enthaltenden Monomere (d) vorzugsweise vor der Polymerisation. ln der ersten Polymerisationsstufe verwendet man vorzugsweise wasserfreie Ameisensäure oder wasserfreie Essigsäure. Die übrigen Reaktionsteilnehmer werden dann bevorzugt ebenfalls in wasserfreier Form eingesetzt.

Die Lösungspolymerisation in der ersten Polymerisationsstufe erfolgt in Gegenwart von Initiatoren, die unter den Polymerisationsbedingungen Radikale bilden, bei Temperaturen in dem Bereich von 20 bis 160°C, vorzugsweise 60 bis 120°C. Falls die Polymerisationstemperatur oberhalb des Siedepunktes des eingesetzten Lösemittels liegen sollte, führt man die Polymerisation unter erhöhtem Druck beispielsweise in einem mit einem Rührer ausgestatteten Autoklaven durch. Vorzugsweise verwendet man solche Initiatoren, die sich in dem organischen, mit Wasser mischbaren Lösemittel lösen, beispielsweise Azoisobuttersäuredinitril, tert.-Butylperoctoat, tert.-Butylperbenzoat, Benzoylperoxid, tert.-Butylperpivalat, Lauroylperoxid, Di-tert.-Butylperoxid, tert.-Butylhydroperoxid sowie Wasserstoffperoxid gegebenenfalls in Gegenwart von Schwermetallkationen.

Die Polymerisation in der ersten Stufe kann gegebenenfalls in Gegenwart von Reglern durchgeführt werden. Geeignete Regler sind beispielsweise Mercaptane wie Ethylmercaptan, n-Butylmercaptan, tert.-Butylmercaptan, n- Dodecylmercaptan oder tert.-Dodecylmercaptan Thioglykolsäure, Terpinolen oder Kohlenstofftetrabromid. Falls Polymerisationsregler eingesetzt werden, so betragen die Mengen an Regler beispielsweise 0,1 bis 15 Gew.-%. Die in der ersten Stufe hergestellten Polymerisate haben eine relativ niedrige Molmasse, z.B. M_{w} von 1000 bis 100000, vorzugsweise 5000 bis 50000 (bestimmt durch Lichtstreuung). Die Bestimmung der Molgewichtsverteilung und des massenmittleren Molgewichtes kann durch dem Fachmann bekannte Methoden wie beispielsweise Gelpermeationschromatographie, Lichtstreuung oder Ultrazentrifugation durchgeführt werden.

Die Monomere werden in der ersten Polymerisationsstufe in Bezug auf das Lösemittel in einer solchen Menge eingesetzt, dass man Polymerlösungen mit einem Polymergehalt von 15 bis 70 Gew.-%, vorzugsweise 30 bis 65 Gew.-% erhält. Die Polymere sind in dem organischen, mit Wasser teilweise bis vollständig mischbaren Lösemittel vorzugsweise klar löslich. Die in der ersten Stufe hergestellten Lösungspolymerisate werden als Dispergiermittel/Schutzkolloid oder evtl. als Saat für die nachfolgende Emulsionspolymerisation benutzt. Dazu ist es erforderlich, zur Lösung des Vorpolymerisats Wasser hinzuzugeben bzw. die Polymerlösung in Wasser einzubringen. Man erhält eine wässrige Polymerlösung, die auch disperse Anteile enthalten kann (kolloidale Lösung), aus der das organische, mit Wasser teilweise bis vollständig mischbare Lösemittelgegebenenfalls abdestilliert werden kann. Die Konzentration des in der ersten Polymerisationsstufe hergestellten Lösungspolymerisats in der mit Wasser versetzten Polymerlösung beträgt beispielsweise 2 bis 35, vorzugsweise 15 bis 25 Gew.-%. Die mit Wasser versetzte Lösung des Vorpolymerisats wird dann in der zweiten Stufe der Polymerisation als Vorlage bzw. Emulgator/Schutzkolloid oder evtl. als Saat für die Emulsionspolymerisation verwendet. Bezogen auf 1 Gew.-Teil des Vorpolymerisats setzt man in der zweiten Stufe der Polymerisation 0,1 bis 10, vorzugsweise 0,8 bis 3 Gew.-Teile mindestens eines nichtionischen, ethylenisch ungesättigten Monomers ein.

Beispiele für nichtionische, ethylenisch ungesättigte Monomere, die in der zweiten Stufe der Emulsionspolymerisation unterworfen werden, sind Styrol, substituierte Styrole wie α-Methylstyrol, C₁- bis C₂₂-(Meth)Acrylate wie insbesondere Methylacrylat, Methylmethacrylat, Ethylacrylat, Ethylmethacrylat, n-Propylacrylat, iso-Propylacrylat, n-Propylmethacrylat, iso-Propylmethacrylat, n-Butylacrylat, iso-Butylacrylat, tert.-Butylacrylat, , , , iso-Butylmethacrylat, n-Butylmethacrylat, tert.-Butylmethacyrlat, Hexylacrylat, Hexylmethacrylat, Ethylhexylacrylat, Ethylhexylmethacrylat, Cyclohexylacrylat, Cyclohexylmethacrylat, n-Decylacrylat, Laurylacrylat, Stearylacrylat und Stearylmethacrylat, Acrylnitril, Methacrylnitril, Amide wie Acrylamid, Methacrylamid oder n-Methylolacrylamid, Vinylformamid, Vinylacetat, Vinylpropionat, Vinylethylether und Vinyl-tert.-butylether, Diene wie Butadien oder lsopren sowie Ester der Acrylsäure bzw. Methacrylsäure, die durch Umsetzung mit mindestens einer Ethylenoxideinheit hergestellt wurden, wie Hydroxyethylmethacrylat oder Diethylenglykolmonomethacrylat. Vorzugsweise unterwirft man in der zweiten Polymerisationsstufe ein Monomergemisch aus
(a) 30 bis 70 Gew.-% Styrol und
(b) 70 bis 30 Gew.-% einer Mischung aus n-Butylacrylat und tert.-Butylacrylat im Gewichtsverhältnis 3 : 1 bis 1 : 3 oder
(c) 70 bis 30 Gew.-% tert.-Butylacrylat oder n-Butylacrylat.
der Emulsionspolymerisation. Anstelle einer Mischung aus n-Butylacrylat und tert.-Butylacrylat kann man auch n-Butylacrylat oder tert.-Butylacrylat jeweils für sich allein mit Styrol copolymerisieren.

Gegenstand der Erfindung ist auch ein Verfahren zur Herstellung der oben beschriebenen feinteiligen, amphoteren, wässrigen Polymerdispersionen, wobei man in der ersten Polymerisationsstufe ein Vorpolymerisat aus einem Monomerengemisch aus
(a) 15 bis 40 Gew.-% mindestens eines (Meth)Acrylsäureesters und/oder (Meth)Acrylamids mit jeweils einer freien Aminogruppe, Ammoniumgruppe und/oder quartären Aminogruppe,
(b) 40 bis 70Gew.-% mindestens eines gegebenenfalls substituierten Styrols,
(c) 0 bis 25 Gew.-% Acrylnitril und/oder Methacrylnitril,
(d) 0,5 bis 5 Gew.-% mindestens eines Säuregruppen enthaltenden ethylenisch ungesättigten Monomere und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt,
in einer Lösungspolymerisation in einem mit Wasser teilweise bis vollständig mischbaren Lösungsmittel herstellt, die Lösung/Dispersion des Vorpolymerisats dann mit Wasser versetzt und anschließend in der wässrigen Lösung des Vorpolymerisats in einer zweiten Polymerisationsstufe mindestens ein nichtionisches, ethylenisch ungesättigtes Monomer einer Emulsionspolymerisation unterwirft.

Die Emulsionspolymerisation erfolgt meistens in dem Temperaturbereich von 40 bis 150, vorzugsweise 60 bis 90°C in Gegenwart üblicher Mengen an vorzugsweise wasserlöslichen Polymerisationsinitiatoren. Meistens setzt man 0,2 bis 4, vorzugsweise 0,5 bis 2 Gew.-% mindestens eines Initiators, bezogen auf die zu polymerisierenden Monomere, ein. Als Initiatoren kommen beispielsweise Azoverbindungen, Peroxide, Hydroperoxide, Wasserstoffperoxid, anorganische Peroxide und Redox-Systeme wie Kombinationen von Wasserstoffperoxid und Ascorbinsäure oder tert.-Butylhydroperoxid und Ascorbinsäure in Betracht. Die Redox-Systeme können außerdem zur Aktivierung noch Schwermetallkationen wie Cer- Mangan- oder Eisen(II)-Ionen enthalten.

Bei der Emulsionspolymerisation kann man die Monomere entweder direkt in die Vorlage dosieren oder man kann sie in Form einer wässrigen Emulsion oder Miniemulsion dem Polymerisationsansatz zuführen. Um die Monomere in Wasser zu emulgieren kann man beispielsweise einen Teil des mit Wasser verdünnten Vorpolymerisates aus der ersten Polymerisationsstufe als Emulgator benutzen oder man emulgiert die Monomere mit Hilfe üblicher nichtionischer, anionischer, kationischer oder amphoterer Emulgatoren in Wasser. Übliche Emulgatoren werden nur gegebenenfalls eingesetzt. Die angewendeten Mengen betragen beispielsweise 0,05 bis 3 Gew.-% und liegen vorzugsweise in dem Bereich von 0,5 bis 2 Gew.-%. Übliche Emulgatoren sind in der Literatur eingehend beschrieben, siehe beispielsweise M. Ash, I. Ash, Handbook of Industrial Surfactants, Third Edition, Synapse Information Resources. Inc.. Beispiele für übliche Emulgatoren sind die Umsetzungsprodukte von langkettigen einwertigen Alkoholen (C₁₀- bis C₂₂-Alkanole) mit 4 bis 50 Mol Ethylenoxid und/oder Propylenoxid pro Mol Alkohol oder ethoxylierte Phenole oder mit Schwefelsäure veresterte alkoxylierte Alkohole, die meistens in mit Alkalilaugen neutralisierter Form verwendet werden. Weitere übliche Emulgatoren sind beispielsweise Natriumalkylsulfonate, Natriumalkylsulfate, Natriumdodecylbenzolsulfonat, Sulfobernsteinsäureester, quartäre Alkylammoniumsalze, Alkylbenzylammoniumsalze, wie Dimethyl-C₁₂- bis C₁₈-alkylbenzylammoniumchloride, primäre, sekundäre und tertiäre Fettaminsalze, quartäre Amidoaminverbindungen, Alkylpyridiniumsalze, Alkylimidazoliniumsalze und Alkyloxazoliniumsalze.

Die Dosierung der Monomere zur Durchführung der Emulsionspolymerisation kann dabei kontinuierlich oder diskontinuierlich erfolgen. Bei Verwendung einer Monomerenmischung kann die Dosierung der Monomere als Mischung oder getrennt bzw. in der Art einer Stufen- oder Gradientenfahrweise erfolgen. Dabei kann die Zugabe über den Dosierzeitraum gleichmäßig oder ungleichmäßig , d. h. mit wechselnder Dosiergeschwindigkeit erfolgen. Durch Zugabe einer Teilmenge des Monomers in die wässrige Lösung/Dispersion des Vorpolymerisates enthaltende Vorlage ist die Dosierung mittels einer Quellfahrweise möglich. Selbstverständlich können während der Emulsionspolymerisation geeignete Regler wie beispielsweise Mercaptane wie Ethylmercaptan, n-Butylmercaptan, tert.-Butylmercaptan, n- Dodecylmercaptan oder tert.-Dodecylmercaptan, Thioglykolsäure, Terpinolen oder Kohlenstofftetrabromid zur Molmassenregelung eingesetzt werden. Bei Verwendung eines Reglers werden bevorzugt Mengen von 0 bis 5 Gew.-% Regler, bezogen auf die Gesamtmenge der Monomeren, eingesetzt.

Der pH-Wert des Reaktionsgemisches liegt in der zweiten Polymerisationsstufe beispielsweise in dem Bereich von 1 bis 5 meistens beträgt er 2 bis 4. Die Polymerkonzentration der bei der Emulsionspolymerisation anfallenden wässrigen Dispersionen beträgt beispielsweise 15 bis 45, vorzugsweise 25 bis 35 Gew.-%.

In der zweiten Polymerisationsstufe erhält man feinteilige, wässrige Polymerdispersionen, die aufgrund der Zusammensetzung des Vorpolymerisats amphotere Eigenschaften haben. Die mittlere Teilchengröße der dispergierten Teilchen beträgt beispielsweise 5 bis 250 nm, vorzugsweise <100 nm, besonders bevorzugt 10 bis 60 nm. Die mittlere Teilchengröße kann durch dem Fachmann bekannte Methoden wie beispielsweise Laserkorrelationsspektroskopie, Ultrazentrifugation oder CHDF bestimmt werden. Ein weiteres Maß für die Teilchengröße der dispergierten Polymerteilchen ist der LD-Wert. Zur Bestimmung des LD-Wertes (Lichtdurchlässigkeit) wird die jeweils zu untersuchende Polymerdispersion in 0,1 gew.-%iger wässriger Einstellung in einer Küvette mit einer Kantenlänge von 2,5 cm mit Licht der Wellenlänge 600 nm vermessen. Aus den Messwerten kann die mittlere Teilchengröße errechnet werden, vgl. B. Verner, M. Bárta, B. Sedlácek, Tables of Scattering Functions for Spherical Particles, Prag 1976, Edice Marco, Rada D-DATA, SVAZEK D-1.

Die oben beschriebenen feinteiligen, amphoteren wässrigen Polymerdispersionen werden als Leimungsmittel für Papier, Pappe und Karton verwendet. Sie eignen sich insbesondere für die Oberflächenleimung von Papierprodukten, sie können jedoch auch zur Masseleimung eingesetzt werden. Für die Anwendung als Leimungsmittel verdünnt man die wässrigen Polymerdispersionen durch Zugabe von Wasser meistens auf einen Polymergehalt von beispielsweise 0,05 bis 3 Gew.-%. Solche Präparationslösungen können gegebenenfalls weitere Stoffe enthalten z.B. Stärke, Farbstoffe, optische Aufheller, Biozide, Verfestiger für Papier, Fixiermittel, Entschäumer, Retentionsmittel und/oder Entwässerungsmittel.

Sofern aus dem Zusammenhang nichts anderes hervorgeht, bedeuten die Prozentangaben in den Beispielen Gewichtsprozent.

### Beispiel 1

In einem 21-Planschliffkolben, der mit Rührer und Innentemperaturmessung ausgestattet war, wurden 101,4 g wasserfreie Essigsäure (Eisessig) vorgelegt und unter Stickstoffatmosphäre auf 105°C erhitzt. Unter Rühren wurde über einen Zeitraum von 45 min eine Mischung aus 125,0 g Styrol, 25,0 g Acrylnitril, 55,0 g N,N-Dimethylaminopropylmethacrylamid, 5,0 g Acrylsäure und 5,0 g n-Butylacrylat gleichmäßig zudosiert. Zeitgleich mit dem Monomerzulauf wurde der Zulauf von 8,8 g tert.-Butylperoctoat in 16,5 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 142,5 g Styrol, 71,3 g n-Butylacrylat und 71,3 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 11,3 g Rongalit® C (Anlagerungsprodukt von Formaldehyd an Natriumbisulfit) zugegeben und nochmals 30 min bei 50°C nachgerührt.

Es wurde eine feinteilige Polymerdispersion mit einem Feststoffgehalt von 29,3% und einem LD-Wert (0,1%) von 89,6% erhalten.

### Beispiel 2

In einem 2l-Planschliffkolben, der mit Rührer und Innentemperaturmessung ausgestattet war, wurden 101,4 g Eisessig vorgelegt und unter Stickstoffatmosphäre auf 105°C erhitzt. Unter Rühren wurde über einen Zeitraum von 45 min eine Mischung aus 110,5 g Styrol, 22,1 g Acrylnitril, 48,6 g N,N-Dimethylaminopropylmethacrylamid, 4,4 g Acrylsäure und 4,4 g n-Butylacrylat gleichmäßig zudosiert. Zeitgleich mit dem Monomerzulauf wurde der Zulauf von 8,8 g tert.-Butylperoctoat in 16,5 g iso-Propanol gestartet, der innerhalb von 60 min zum Reaktionsgemisch zudosiert wurde. Nach Beendigung des Initiatorzulaufes wurde das Reaktionsgemisch bei einer Temperatur von 105°C noch 30 min gerührt.

Die homogene Polymermasse wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 155,0 g Styrol, 155,0 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 11,3 g Rongalit® C zugegeben und nochmals 30 min bei 50°C nachgerührt.

Es wurde eine feinteilige Polymerdispersion mit einem Feststoffgehalt von 29,2% und einem LD-Wert (0,1%) von 89% erhalten.

### Beispiel 3

Beispiel 1 wurde mit der einzigen Ausnahme wiederholt, dass man in der zweiten Stufe, der Emulsionspolymerisation, ein Monomerengemisch aus 142,5 g Styrol und 142,5 g t-Butylacrylat einsetzte. Es wurde eine feinteilige Polymerdispersion mit einem Feststoffgehalt von 29,5% und einem LD-Wert (0,1%) von 90% erhalten.

### Beispiel 4

In einem 21-Planschliffkolben, der mit Rührer und Innentemperaturmessung ausgestattet war, wurden 101,4 g Eisessig vorgelegt und unter Stickstoffatmosphäre auf 105°C erhitzt. Unter Rühren wurde über einen Zeitraum von 45 min eine Mischung aus 133,0 g Styrol, 57,0 g N,N-Dimethylaminopropylmethacrylamid und 5,0 g Methacrylsäure gleichmäßig zudosiert. Zeitgleich mit dem Monomerzulauf wurde der Zulauf von 8,8 g tert.-Butylperoctoat in 17,5 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 152,5 g Styrol und 152,5 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 85°C noch 60 min nachgerührt und das Reaktionsgemisch dann auf 70°C abgekühlt. Zur Nachpolymerisation wurden 11,3 g Rongalit® C zugegeben. Das Reaktionsgemisch wurde anschließend 30 min bei 70°C gerührt.

Es wurde eine feinteilige Polymerdispersion mit einem Feststoffgehalt von 29,3% und einem LD-Wert (0,1%) von 89 % erhalten.

### Beispiel 5

In einem 21-Planschliffkolben, der mit Rührer und Innentemperaturmessung ausgestattet war, wurden 101,4 g Eisessig vorgelegt und unter Stickstoffatmosphäre auf 105°C erhitzt. Unter Rühren wurde über einen Zeitraum von 45 min eine Mischung aus 112,5 g Styrol, 25,0 g Acrylnitril, 72,5 g N,N-Dimethylaminoethylacrylat und 5,0 g Acrylsäure gleichmäßig zudosiert. Zeitgleich mit dem Monomerzulauf wurde der Zulauf von 8,8 g tert.-Butylperoctoat in 16,5 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 85°C innerhalb von 30 min mit 962 g vollentsalztem Wasser versetzt. Nach Zugabe von 7,5 g 1 %iger Eisen(II)sulfatlösung wurden innerhalb von 30 min 20 g einer 5 %igen Wasserstoffperoxidlösung zudosiert. Danach wurde bei 85°C eine Mischung aus 142,5 g Styrol und 142,5 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 85°C noch 60 min nachgerührt und das Reaktionsgemisch anschleißend abgekühlt.

Es wurde eine feinteilige Polymerdispersion mit einem Feststoffgehalt von 28,9% und einem LD-Wert (0,1%) von 85 % erhalten.

### Beispiel 6

In einem 2I-Planschliffkolben, der mit Rührer und Innentemperaturmessung ausgestattet war, wurden 101,4 g Eisessig vorgelegt und unter Stickstoffatmosphäre auf 105°C erhitzt. Unter Rühren wurde über einen Zeitraum von 45 min eine Mischung aus 133,0 g Styrol, 57,0 g N,N-Dimethylaminoethylmethacrylat und 5,0 g Acrylsäure gleichmäßig zudosiert. Zeitgleich mit dem Monomerzulauf wurde der Zulauf von 8,8 g tert.-Butylperoctoat in 18,2 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 60°C innerhalb von 30 min mit 971,5 g vollentsalztem Wasser versetzt. Nach Zugabe von 7,5 g 1 %iger Eisen(II)sulfatlösung sowie 5,0 g einer 10%igen wässrigen Ascorbinsäure-Lösung wurden innerhalb von 30 min 20 g einer 5 %igen Wasserstoffperoxidlösung zudosiert. Danach wurde bei 60°C eine Mischung aus 119,2 g Styrol und 119,2 g tert.-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 60°C noch 60 min nachgerührt und das Reaktionsgemisch anschließend abgekühlt.

Es wurde eine feinteilige Polymerdispersion mit einem Feststoffgehalt von 26,0 % und einem LD-Wert (0,1%) von 86 % erhalten.

### Beispiel 7

In einem 2I-Planschliffkolben, der mit Rührer und Innentemperaturmessung ausgestattet war, wurden 101,7 g Eisessig vorgelegt und unter Stickstoffatmosphäre auf 105°C erhitzt. Unter Rühren wurde über einen Zeitraum von 45 min eine Mischung aus 133,0 g Styrol, 47,0 g N,N-Dimethylaminoethylacrylat, 10,0 g N,N-Dimethylaminopropylmethacrylamid und 5,0 g Acrylsäure gleichmäßig zudosiert. Zeitgleich mit dem Monomerzulauf wurde der Zulauf von 8,8 g tert.-Butylperoctoat in 18,2 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 60°C innerhalb von 30 min mit 955,1 g vollentsalztem Wasser versetzt. Nach Zugabe von 7,5 g einer 1%igen Eisen(II)sulfatlösung sowie 5,0 g einer 10%igen wässrigen Ascorbinsäure-Lösung wurden innerhalb von 30 min 20 g einer 5 %igen Wasserstoffperoxidlösung zudosiert. Danach wurde bei 60°C eine Mischung aus 152,5 g Styrol und 152,5 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 60°C noch 60 min nachgerührt und das Reaktionsgemisch anschließend abgekühlt.

Es wurde eine feinteilige Polymerdispersion mit einem Feststoffgehalt von 28,7 % und einem LD-Wert (0,1%) von 91 % erhalten.

### Beispiel 8

In einem 2I-Planschliffkolben, der mit Rührer und Innentemperaturmessung ausgestattet war, wurden 101,7 g Eisessig vorgelegt und unter Stickstoffatmosphäre auf 105°C erhitzt. Unter Rühren wurde über einen Zeitraum von 45 min eine Mischung aus 133,0 g Styrol, 57,0 g N,N-Dimethylaminoethylacrylat, und 5,0 g Acrylsäure gleichmä-ßig zudosiert. Zeitgleich mit dem Monomerzulauf wurde der Zulauf von 8,8 g tert.-Butylperoctoat in 18,2 g iso-Propanol gestartet, der innerhalb von 60 min zum Reaktionsgemisch zudosiert wurde. Nach Beendigung des Initiatorzulaufes wurde das Reaktionsgemisch noch 30 min bei einer Temperatur von 105°C gerührt.

Die homogene Polymermasse wurde anschließend bei 85°C innerhalb von 30 min mit 800,0 g vollentsalztem Wasser versetzt. Nach Zugabe von 7,5 g 1%iger Eisen(II)sulfatlösung sowie 5,0 g einer 10%igen wässrigen Ascorbinsäure-Lösung wurden innerhalb von 30 min 20 g einer 5 %igen Wasserstoffperoxidlösung zudosiert. Danach wurde bei 85°C eine Mischung aus 119,2 g Styrol und 119,2 g tert-Butylacrylat über einen Zeitraum von 120 min gleichmäßig zudosiert. Gleichzeitig mit dem Monomerzulauf wurde ein getrennter Zulauf von 80,0 g einer 5 %igen Wasserstoffperoxidlösung über 150 min zudosiert. Nach Ende der Zugabe wurde bei 85°C noch 60 min nachgerührt und das Reaktionsgemisch anschließend abgekühlt.

Es wurde eine feinteilige Polymerdispersion mit einem Feststoffgehalt von 29,1 % und einem LD-Wert (0,1%) von 43 % erhalten.

### Vergleichsbeispiel 1 gemäß EP-A-0 051 144

In einem 2I-Planschliffkolben, der mit Rührer und Innentemperaturmessung ausgestattet war, wurden unter Stickstoffatmosphäre 60 g Eisessig, 60 g Styrol, 33 g N,N-Dimethylaminopropylmethacrylamid, 15 g Acrylsäure sowie 1 g Azobisisobutyronitril gemischt und unter Rühren auf 85°C erhitzt und bei dieser Temperatur weitere 30 min gerührt. Anschließend wurden bei gleicher Temperatur 1,25 g Azobisisobutyronitril gelöst in 5 g Aceton über einen Zeitraum von 60 min zudosiert. Nach beendeter Zugabe wurde nochmals 30 min bei 105°C nachpolymerisiert.

Die erhaltene homogene Polymerlösung wurde anschließend bei 85°C mit 590 g vollentsalztem Wasser versetzt, wodurch eine homogene, leicht trübe Lösung erhalten wurde. Nach Zugabe von 20 g einer 6 %igen Wasserstoffperoxidlösung sowie 1,2 g einer 10%igen Eisen(II)sulfatlösung wurden über einen Zeitraum von 120 min getrennt 80 g einer 6 %igen Wasserstoffperoxidlösung sowie eine Mischung aus 66 g Styrol und 126 g iso-Butylacrylat gleichmäßig unter Rühren bei einer Temperatur von 85°C zudosiert. Nach beendetem Zulauf wurde bei gleicher Temperatur noch 60 min nachpolymerisiert.

Es wurde eine feinteilige Polymerdispersion mit einem Feststoffgehalt von 28,4% und einem LD-Wert (0,1%) von 66% erhalten.

### Vergleichsbeispiel 2 gemäß EP-A-1 180 527

In einem 21-Planschliffkolben, der mit Rührer und Innentemperaturmessung ausgestattet war, wurde eine Mischung aus 105,4 g Styrol, 40,0 g N,N-Dimethylaminopropylmethacrylamid, 0,8 g tert-Dodecylmerkaptan (95%) und 117,8 g Eisessig bei Raumtemperatur vorgelegt und unter Stickstoffatmosphäre unter Rühren auf 95°C erhitzt. Nach Erreichen der Reaktionstemperatur wurde dann unter Rühren eine Lösung von 2,0 g Azobisisobutyronitril in 13,4 g Aceton über eine Dauer von 120 min. gleichmäßig zu der Reaktionslösung zudosiert. Der Ansatz wurde dann noch 120 min bei 95°C nachgerührt und anschließend abgekühlt.

Das Vorpolymerisat wurde bei Raumtemperatur unter Rühren mit 1260 g vollentsalztem Wasser versetzt. Die Mischung wurde unter Stickstoffatmosphäre und fortwährendem Rühren auf 85°C erhitzt. Man erhielt eine homogene, leicht trübe Flüssigphase. Nach Erreichen der Reaktionstemperatur wurde das Vorlagegemisch 15 min nachgerührt und anschließend mit 20,0 g einer 1%igen Eisen(II)sulfatlösung versetzt. Danach wurde gleichzeitig mit konstanter Dosiergeschwindigkeit aus getrennten Zuläufen eine Mischung aus 129,5 g Styrol und 92,5 g n-Butylacrylat sowie 64,8g einer 3%igen Wasserstoffperoxid-Lösung über 90 min zum Reaktionsgemisch zudosiert, wobei die Temperatur konstant gehalten wurde. Nach Beendigung der Zuläufe wurde der Ansatz noch 15 min bei 85 °C nachgerührt und dann mit 2,3 g tert-Butylhydroperoxid (70%) zur Nachaktivierung versetzt. Nach einer nochmaligen Nachrührzeit von 60 min bei 85°C wurde der Ansatz abgekühlt und bei Raumtemperatur mit wässriger Trilon®-B-Lösung (Netzmittel) versetzt.

Es wurde eine feinteilige Polymerdispersion mit einem Feststoffgehalt von 19,7% und einem LD-Wert (0,1%) von 66% erhalten.

Anwendungstechnische Prüfungen der nach den Beispielen und den Vergleichsbeispielen erhaltenen Polymerdispersionen

Zur anwendungstechnischen Prüfung der Oberflächenleimungswirkung wurden die erfindungsgemäßen Dispersionen sowie die Vergleichsdispersionen mittels einer Laborleimpresse auf das Prüfpapier (100% Altpapier, 80g/m² Flächenmasse, ungeleimt) aufgetragen. Eine oxidierte Kartoffelstärke (Emox TSC) wurde durch Erhitzen auf 95°C in Wasser gelöst und dann auf die gewünschte Konzentration eingestellt. Zu der Stärkelösung wurden dann die zu prüfenden Dispersionen dosiert, so dass die Leimpressenflotte 80g/l einer oxidierten, gelösten Kartoffelstärke (Emox TSC) sowie 0,1 - 1,5g/l der Dispersionen enthielt..

Die Leimungswirkung der Dispersionen, die gemäß den Beispielen 1-4 sowie den Vergleichsbeispielen 1 und 2 erhalten wurden, wurde anschließend durch Oberflächenapplikation auf das ungeleimte Prüfpapier ermittelt. Dazu wurde das Papier zweimal durch die Leimpresse geführt, wobei im Mittel eine Zunahme des Gewichts von ca. 65% erreicht wurde.

Die Trocknung der oberflächengeleimten Papiere erfolgte auf einem Trockenzylinder bei 90°C. Anschließend wurden die Papiere über Nacht im Klimaraum (23°C, 50% rel. Luftfeuchte) aufbewahrt, bevor der Leimungsgrad bestimmt wurde.

Zur Bestimmung des Leimungsgrades der oberflächengeleimten Papiere wurden der Cobb₆₀- sowie der Cobb₁₂₀-Wert nach DIN 53 132 bestimmt. Als Cobb₆₀-Wert ist die Wasseraufnahme des Papierblattes in g/m² nach einem Kontakt mit Wasser und einer Kontaktzeit von 60s (bzw. 120 s bei Cobb₁₂₀-Wert) definiert. Je niedriger der Cobb-Wert, desto besser ist die Leimungswirkung der eingesetzten Dispersion. Die Prüfergebnisse sind in der Tabelle angegeben.

**Tabelle**

| | Cobb₆ₒ-Wert [g/m²] | | | Cobb₁₂₀-Wert [g/m²] |
|---|---|---|---|---|
| Auftragsmenge [g/l] | | 1,0 | 1,5 | 1,0 |
| Beispiel 1 | | 24 | 23 | 32 |
| Beispiel 2 | | 25 | 23 | 37 |
| Beispiel 3 | | 25 | 22 | 36 |
| Beispiel 4 | | 25 | 22 | 33 |
| Beispiel 5 | | 26 | 25 | 48 |
| Beispiel 6 | | 25 | 23 | 38 |
| Beispiel 7 | | 24 | 23 | 39 |
| Beispiel 8 | | 23 | 22 | 40 |
| Vergleichsbeispiel 1 | | 27 | 26 | 53 |
| Vergleichsbeispiel 2 | | 68 | 31 | 103 |

## Patentansprüche

1. Feinteilige, amphotere, wässrige Polymerdispersionen, die durch eine zweistufige Polymerisation erhältlich sind, wobei man in der ersten Polymerisationsstufe ein Vorpolymerisat aus einem Monomerengemisch aus
(a) 15 bis 40 Gew.-% mindestens eines (Meth)Acrylsäureesters und/oder (Meth)Acrylamids mit jeweils einer freien Aminogruppe, protonierten und/oder quaternisierten Aminogruppe,
(b) 40 bis 70 Gew.-% mindestens eines gegebenenfalls substituierten Styrols,
(c) 0 bis 25 Gew.-% Acrylnitril und/oder Methacrylnitril,
(d) 0,5 bis 5 Gew.-% mindestens eines Säuregruppen enthaltenden ethylenisch ungesättigten Monomers und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt,
in einer Lösungspolymerisation in einem mit Wasser teilweise bis vollständig mischbaren Lösungsmittel herstellt, die Lösung/Dispersion des Vorpolymerisats dann mit Wasser versetzt und anschließend in der wässrigen Lösung des Vorpolymerisats in einer zweiten Polymerisationsstufe mindestens ein nichtionisches, ethylenisch ungesättigtes Monomer einer Emulsionspolymerisation unterwirft.

2. Feinteilige, amphotere, wässrige Polymerdispersionen nach Anspruch 1, **dadurch gekennzeichnet, dass** man in der zweiten Polymerisationsstufe ein Emulsionspolymerisat aus einem Monomerengemisch aus
(a) 0 bis 80 Gew.-% mindestens eines gegenbenenfalls substituierten Styrols,
(b) 0 bis 100 Gew.-% mindestens eines C₁- bis C₁₈-(Meth)Acrylsäureesters und
(c) 0 bis 30 Gew.-% mindestens eines von (a) und (b) verschiedenen, nichtionischen ethylenisch ungesättigten Monomers,
wobei die Summe aus (a) + (b) + (c) 100 Gew. % ergibt, in Gegenwart vonlnitiatoren polymerisiert.

3. Feinteilige, amphotere, wässrige Polymerdispersionen nach Anspruch 1 oder 2, **dadurch gekennzeichnet, dass** man in der ersten Polymerisationsstufe ein Vorpolymerisat aus einer Monomermischung aus
(a) 15 bis 40 Gew.-% mindestens eines (Meth)Acrylsäureesters und/oder (Meth)Acrylamids mit jeweils einer freien Aminogruppe, protonierten und/oder quaternisierten Aminogruppe,
(b) 40 bis 70 Gew.-% mindestens eines gegebenenfalls substituierten Styrols,
(c) 5 bis 25 Gew.-% Acrylnitril und/oder Methacrylnitril,
(d) 0,5 bis 5 Gew.-% mindestens einer ethylenisch ungesättigten Carbonsäure oder eines Carbonsäureanhydrids und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt, nach Art einer Lösungspolymerisation in einem mit Wasser teilweise bis vollständig mischbaren organischen Lösemittel herstellt.

4. Feinteilige, amphotere, wässrige Polymerdispersionen nach einem der Ansprüche 1 bis 3, **dadurch gekennzeichnet, dass** man in der ersten Polymerisationsstufe ein Vorpolymerisat aus einer Monomermischung aus
(a) Dimethylaminopropylmethacrylamid in Form des Salzes mit mindestens einer Mineralsäure oder Carbonsäure und/oder in quaternisierter Form,
(b) Styrol,
(c) Acrylnitril und/oder Methacrylnitril,
(d) Acrylsäure und/oder Methacrylsäure und
(e) n-Butylacrylat, Isobutylacrylat und/oder tert.-Butylacrylat
herstellt.

5. Feinteilige, amphotere, wässrige Polymerdispersionen nach einem der Ansprüche 1 bis 4, **dadurch gekennzeichnet, dass** man in der zweiten Polymerisationsstufe ein Monomergemisch aus
(a) 30 bis 70 Gew.-% Styrol und
(b) 70 bis 30 Gew.-% einer Mischung aus n-Butylacrylat und tert.-Butylacrylat im Gewichtsverhältnis 3 : 1 bis 1 : 3 oder
(c) 70 bis 30 Gew.-% tert.Butylacrylat oder n-Butylacrylat
der Emulsionspolymerisation unterwirft.

6. Verfahren zur Herstellung der feinteiligen, amphoteren, wässrigen Polymerdispersionen nach einem der Ansprüche 1 bis 5 durch eine zweistufige Polymerisation, **dadurch gekennzeichnet, dass** man in der ersten Polymerisationsstufe ein Vorpolymerisat aus einem Monomerengemisch aus
(a) 15 bis 40 Gew.-% mindestens eines (Meth)Acrylsäureesters und/oder (Meth)Acrylamids mit jeweils einer freien Aminogruppe, Ammoniumgruppe und/oder quartären Aminogruppe,
(b) 40 bis 70 Gew.-% mindestens eines gegebenenfalls substituierten Styrols,
(c) 0 bis 25 Gew.-% Acrylnitril und/oder Methacrylnitril,
(d) 0,5 bis 5 Gew.-% mindestens eines Säuregruppen enthaltenden ethylenisch ungesättigten Monomeren und
(e) 0 bis 30 Gew.-% mindestens eines von (b) und (c) verschiedenen, nichtionischen, ethylenisch ungesättigten Monomers,
wobei die Summe aus (a) + (b) + (c) + (d) + (e) 100 Gew.-% ergibt,
in einer Lösungspolymerisation in einem mit Wasser teilweise bis vollständig mischbaren Lösungsmittel herstellt, die Lösung des Vorpolymerisats dann mit Wasser versetzt und anschließend in der wässrigen Lösung des Vorpolymerisats in einer zweiten Polymerisationsstufe mindestens ein nichtionisches, ethylenisch ungesättigtes Monomer einer Emulsionspolymerisation unterwirft.

7. Verfahren nach Anspruch 6, **dadurch gekennzeichnet, dass** man die Lösung des Vorpolymerisats mit Wasser verdünnt, so dass die entstehende wässrige Lösung/Dispersion eine Konzentration von 2 bis 35 Gew.-% aufweist.

8. Verfahren nach Anspruch 6 oder 7, **dadurch gekennzeichnet, dass** man die Emulsionspolymerisation in Gegenwart eines Redoxkatalysators durchführt.

9. Verwendung der feinteiligen, amphoteren, wässrigen Polymerdispersionen nach einem der Ansprüche 1 bis 5 als Leimungsmittel für Papier, Pappe und Karton sowie als Beschichtungsmittel für Leder und Textilien.

## Claims

1. A finely divided, amphoteric, aqueous polymer dispersion which is obtainable by a two-stage polymerization, a prepolymer being prepared in the first polymerization stage from a monomer mixture comprising
(a) from 15 to 40% by weight of at least one (meth)acrylate and/or (meth)acrylamide having in each case a free amino group, protonated amino group and/or quaternized amino group,
(b) from 40 to 70% by weight of at least one optionally substituted styrene,
(c) from 0 to 25% by weight of acrylonitrile and/or methacrylonitrile,
(d) from 0.5 to 5% by weight of at least one ethylenically unsaturated monomer comprising acid groups and
(e) from 0 to 30% by weight of at least one nonionic, ethylenically unsaturated monomer differing from (b) and (c),
the sum of (a) + (b) + (c) + (d) + (e) being 100% by weight,
in a solution polymerization in a solvent partly to completely miscible with water, water then being added to the solution/dispersion of the prepolymer and then at least one nonionic, ethylenically unsaturated monomer being subjected to an emulsion polymerization in the aqueous solution of the prepolymer in a second polymerization stage.

2. The finely divided, amphoteric, aqueous polymer dispersion according to claim 1, wherein, in the second polymerization stage, an emulsion polymer of a monomer mixture comprising
(a) from 0 to 80% by weight of at least one optionally substituted styrene,
(b) from 0 to 100% by weight of at least one C₁- to C₁₈-(meth)acrylate and
(c) from 0 to 30% by weight of at least one nonionic ethylenically unsaturated monomer differing from (a) and (b),
the sum of (a) + (b) + (c) being 100% by weight, is polymerized in the presence of initiators.

3. The finely divided, amphoteric, aqueous polymer dispersion as claimed in claim 1 or 2, wherein, in the first polymerization stage, a prepolymer is prepared from a monomer mixture comprising
(a) from 15 to 40% by weight of at least one (meth)acrylate and/or (meth)acrylamide having in each case one free amino group, protonated amino group and/or quaternized amino group,
(b) from 40 to 70% by weight of at least one optionally substituted styrene,
(c) from 5 to 25% by weight of acrylonitrile and/or methacrylonitrile,
(d) from 0.5 to 5% by weight of at least one ethylenically unsaturated carboxylic acid or of a carboxylic anhydride and
(e) from 0 to 30% by weight of at least one nonionic, ethylenically unsaturated monomer differing from (b) and (c),
the sum of (a) + (b) + (c) + (d) + (e) being 100% by weight, by a solution polymerization method in an organic solvent partly to completely miscible with water.

4. The finely divided, amphoteric aqueous polymer dispersion according to any of claims 1 to 3, wherein, in the first polymerization stage, a prepolymer is prepared from a monomer mixture comprising
(a) dimethylaminopropylmethacrylamide in the form of the salt with at least one mineral acid or carboxylic acid and/or in quaternized form,
(b) styrene,
(c) acrylonitrile and/or methacrylonitrile,
(d) acrylic acid and/or methacrylic acid and
(e) n-butyl acrylate, isobutyl acrylate and/or tert-butyl acrylate.

5. The finely divided, amphoteric, aqueous polymer dispersion according to any of claims 1 to 4, wherein, in the second polymerization stage, a monomer mixture comprising
(a) from 30 to 70% by weight of styrene and
(b) from 70 to 30% by weight of a mixture of n-butyl acrylate and tert-butyl acrylate in the weight ratio of from 3 : 1 to 1 : 3 or
(c) from 70 to 30% by weight of tert-butyl acrylate or n-butyl acrylate
is subjected to the emulsion polymerization.

6. A process for the preparation of the finely divided, amphoteric, aqueous polymer dispersions according to any of claims 1 to 5 by a two-stage polymerization, wherein a prepolymer is prepared in the first polymerization stage from a monomer mixture comprising
(a) from 15 to 40% by weight of at least one (meth)acrylate and/or (meth)acrylamide having in each case a free amino group, ammonium group and/or quaternary amino group,
(b) from 40 to 70% by weight of at least one optionally substituted styrene,
(c) from 0 to 25% by weight of acrylonitrile and/or methacrylonitrile,
(d) from 0.5 to 5% by weight of at least one ethylenically unsaturated monomer comprising acid groups and
(e) from 0 to 30% by weight of at least one nonionic, ethylenically unsaturated monomer differing from (b) and (c),
the sum of (a) + (b) + (c) + (d) + (e) being 100% by weight,
in a solution polymerization in a solvent partly to completely miscible with water, water is then added to the solution of the prepolymer and then at least one nonionic, ethylenically unsaturated monomer is subjected to an emulsion polymerization in the aqueous solution of the prepolymer in a second polymerization stage.

7. The process according to claim 6, wherein the solution of the prepolymer is diluted with water so that the resulting aqueous solution/dispersion has a concentration of from 2 to 35% by weight.

8. The process according to claim 6 or 7, wherein the emulsion polymerization is carried out in the presence of a redox catalyst.

9. The use of the finely divided, amphoteric, aqueous polymer dispersions according to any of claims 1 to 5 as sizes for paper, board and cardboard and as coating materials for leather and textiles.

## Revendications

1. Dispersions de polymères finement divisées, amphotères et aqueuses qu'on produit par polymérisation à deux étapes, dans laquelle on prépare à la première étape de polymérisation, un prépolymère composé d'un mélange de monomères de :
(a) 15 à 40% en poids d'au moins un ester d'acide (méth)acrylique et/ou amide (méth)acrylique avec chaque fois un groupe amino libre, un groupe amino protoné et/ou quaternisé,
(b) 40 à 70% en poids d'au moins un styrène éventuellement substitué,
(c) 0 à 25% en poids d'acrylonitrile et/ou de méthacrylonitrile,
(d) 0,5 à 5% en poids d'au moins un monomère éthyléniquement insaturé contenant des groupes acides et
(e) 0 à 30% en poids d'au moins un monomère éthyléniquement insaturé, non ionique, différent de (b) et de (c),
la somme de (a) + (b) + (c) + (d) + (e) donnant 100% en poids,
dans une polymérisation en solution dans un solvant partiellement ou entièrement miscible à l'eau, on mélange alors la solution/dispersion du prépolymère avec de l'eau et on soumet ensuite dans la solution aqueuse du prépolymère lors d'une deuxième étape de polymérisation au moins un monomère non ionique, éthyléniquement insaturé, à une polymérisation en émulsion.

2. Dispersions de polymères finement divisées, amphotères et aqueuses selon la revendication 1, **caractérisées en ce qu'**on polymérise, lors de la deuxième étape de polymérisation et en présence d'initiateurs, un polymère en émulsion Composé d'un mélange de monomères de :
(a) 0 à 80% en poids d'au moins un styrène éventuellement substitué,
(b) 0 à 100% en poids d'au moins un ester d'acide (méth)acrylique en C₁-C₁₈ et
(c) 0 à 30% en poids d'au moins un monomère éthyléniquement insaturé, non ionique, différent de (a) et (b),
la somme de (a) + (b) + (c) donnant 100% en poids.

3. Dispersions de polymères finement divisées, amphotères et aqueuses selon la revendication 1 ou 2, **caractérisées en ce qu'**on prépare, lors de la première étape de polymérisation, un prépolymère composé d'un mélange de monomères de :
(a) 15 à 40% en poids d'au moins un ester d'acide (méth)acrylique et/ou d'amide (méth)acrylique avec chaque fois un groupe amino libre, un groupe amino protoné et/ou quaternisé,
(b) 40 à 70% en poids d'au moins un styrène éventuellement substitué,
(c) 5 à 25% en poids d'acrylonitrile et/ou de méthacrylonitrile,
(d) 0,5 à 5% en poids d'au moins un acide carboxylique éthyléniquement insaturé ou d'un anhydride d'acide carboxylique, et
(e) 0 à 30% en poids d'au moins un monomère éthyléniquement insaturé, non ionique, différent de (b) et (c), 1
la somme de (a) + (b) + (c) + (d) + (e) donnant 100% en poids, selon une technique de polymérisation en solution dans solvant organique partiellement ou entièrement miscible à l'eau.

4. Dispersions de polymères finement divisées, amphotères et aqueuses selon l'une des revendications 1 à 3, **caractérisées en ce qu'**on prépare, lors de la première étape de polymérisation, un prépolymère composé d'un mélange de monomères de :
(a) méthacrylamide de diméthylaminopropyle sous forme du sel avec au moins un acide minéral ou acide carboxylique et/ou sous forme quaternisée,
(b) styrène,
(c) acrylonitrile et/ou méthacrylonitrile,
(d) acide acrylique et/ou acide méthacrylique, et
(e) n-butylacrylate, isobutylacrylate et/ou t-butylacrylate.

5. Dispersions de polymères finement divisées, amphotères et aqueuses selon l'une des revendications 1 à 4, **caractérisées en ce qu'**on soumet, lors de la deuxième étape de polymérisation, un mélange de monomères composé de :
(a) 30 à 70% en poids de styrène et
(b) 70 à 30% en poids d'un mélange de n-butylacrylate et de t-butylacrylate en rapport pondéral de 3:1 à 1:3 ou
(c) 70 à 30% en poids de t-butylacrylate ou n-butylacrylate
à la polymérisation en émulsion.

6. Procédé de préparation des dispersions de polymères finement divisées, amphotères et aqueuses selon l'une des revendications 1 à 5 par une polymérisation à deux étapes, **caractérisé en ce qu'**on prépare, à la première étape de polymérisation, un prépolymère composé d'un mélange de monomères de :
(a) 15 à 40% en poids d'au moins un ester d'acide (méth)acrylique et/ou amide (méth)acrylique avec chaque fois un groupe amino libre, un groupe ammonium et/ou un groupe amino quaternaire,
(b) 40 à 70% en poids d'au moins un styrène éventuellement substitué,
(c) 0 à 25% en poids d'acrylonitrile et/ou de méthacrylonitrile,
(d) 0,5 à 5% en poids d'au moins un monomère éthyléniquement insaturé contenant des groupes acides et
(e) 0 à 30% en poids d'au moins un monomère éthyléniquement insaturé, non ionique, différent de (b) et (c),
la somme de (a) + (b) + (c) + (d) + (e) donnant 100% en poids,
lors d'une polymérisation en solution dans un solvant partiellement ou entièrement miscible à l'eau, on mélange alors la solution du prépolymère avec de l'eau et on soumet ensuite dans la solution aqueuse du prépolymère lors d'une deuxième étape de polymérisation au moins un monomère non ionique, éthyléniquement insaturé, à une polymérisation en émulsion.

7. Procédé selon la revendication 6, **caractérisé en ce qu'**on dilue la solution du prépolymère avec de l'eau de sorte que la solution/dispersion aqueuse qui en résulte présente une concentration de 2 à 35% en poids.

8. Procédé selon la revendication 6 ou 7, **caractérisé en ce qu'**on effectue la polymérisation en émulsion en présence d'un catalyseur redox.

9. Utilisation des dispersions de polymères finement divisées, amphotères et aqueuses selon l'une des revendications 1 à 5 comme produit de collage pour le papier, le carton-pâte et le carton ainsi que comme agent de revêtement pour le cuir et les textiles.
